# EUROPEAN PATENT APPLICATION

(11) **EP 4 723 421 A1**
(43) Date of publication of application: **08.04.2026**
(21) Application number: 24896070.0
(22) Date of filing: 21.10.2024
(51) Int. Cl.: H02J 3/32

(54) **ENERGY STORAGE CONFIGURATION METHOD AND APPARATUS AND ELECTRONIC DEVICE**

(30) Priority: 27.11.2023 CN 202311624641
(71) Applicant: Hefei Gotion High-Tech Power Energy Co., Ltd., Hefei, Anhui 230012 (CN)
(72) Inventor: CHENG, Qianqian, Hefei, Anhui 230012 (CN); SU, Qun, Hefei, Anhui 230012 (CN); ZHANG, Dongsheng, Hefei, Anhui 230012 (CN); YANG, Yang, Hefei, Anhui 230012 (CN)
(74) Representative: Dehns Germany Partnerschaft mbB
(86) International application number: PCT/CN2024/126151
(87) International publication number: WO 2025/112977

(57) **Abstract**

The present disclosure provides a method and apparatus for configuring energy storage, and an electronic device. The present disclosure relates to the field of energy storage systems. The method includes: determining a demand power of a target electricity consumption region; determining a rated energy of an energy storage system based on the demand power, wherein the energy storage system includes a plurality of energy storage batteries, the plurality of energy storage batteries are connected to a power grid through a plurality of string inverters, the plurality of energy storage batteries correspond one-to-one to the plurality of string inverters, and each energy storage battery of the plurality of energy storage batteries includes a plurality of cells; determining battery parameters respectively corresponding to the plurality of energy storage batteries according to a rated capacity of the energy storage system; and determining respectively parameter configuration results corresponding to the plurality of string inverters based on the battery parameters respectively corresponding to the plurality of energy storage batteries. According to the present disclosure, the technical problems that due to unbalanced charge-discharge of energy storage batteries in an energy storage system in the related art, the use efficiency of the energy storage system is low, and the service life of the batteries is short are solved.

## Description

### Cross-Reference to Related Application

The present disclosure claims the priority to Chinese Patent Application No.202311624641.X, filed on November 27, 2023 and entitled "Method and apparatus for configuring energy storage, and electronic device", which is incorporated in its entirety herein by reference as the present disclosure in whole or in part.

### Technical Field

The present disclosure relates to the field of energy storage systems, and in particular to a method and apparatus for configuring energy storage, and an electronic device.

### Background

At present, electrochemical energy storage has played an important role in source, a power grid, and load sides. At the power generation side, dominated by power plants of new energy such as wind and light, the addition of energy storage devices can reduce curtailment of wind and light, and significantly improve the power generation revenue of the power plants and provide power support for the power grid. In large-scale power plants dominated by collection stations and substations at the grid side, the addition of centralized large-scale energy storage can effectively regulate the frequency and the voltage of the power grid through charge and discharge, so as to ensure stable operation of the power grid. In the industrial and commercial-oriented factories and parks at the load side, an energy storage system can be configured to conduct stored energy discharge at the peak electricity price, so as to support the load in the park and alleviate the load pressure on the power grid simultaneously. At the valley electricity price, the energy storage system can store energy for charge to reduce the waste of electrical energy of the power grid. Thus, peak-valley arbitrage is achieved, and certain revenue is brought to industrial and commercial enterprise users. Moreover, the energy storage system can also be used as an emergency power supply to provide temporary electricity for major devices.

At present, when the energy storage system is configured for the industrial and commercial parks, the load absorption capacity, a charge-discharge rate, local peak-valley electricity price periods, occupied area, safety specifications, etc. of the industrial and commercial parks need to be taken into account. In the related art, the energy storage system of the industrial and commercial mainly includes an outdoor form of a centralized battery prefabricated cabin and an inverter-booster integrated cabin, and an integrated form of distributed unit energy storage batteries + inverters. In terms of the configuration mode, the primary difference between the two above energy storage systems lies in the flexibility. The two above energy storage systems are both arranged in a form of outdoor cabins, which offer convenient mounting and regulating. However, for the industry and commerce, the two above energy storage systems will occupy more land resources under the same capacity configuration, and the charge-discharges of the two above energy storage systems are typically at 0.5C (Coulomb). A centralized energy storage system is mostly faced with the problem of a large number of parallel-connected battery clusters at the direct-current side. Due to an increase in inter-cluster circulation and unbalanced inter-cluster charge and discharge, some batteries will have insufficient actual output, and other batteries will be used beyond the charge-discharge rate. In consequence, the loss is increased to reduce the system efficiency. Moreover, the system fault rate is increased, and the system service life is shortened. Although the distributed energy storage system reduces the inter-cluster circulation, it suffers from a lower energy density per unit, a higher cost, and a larger occupied area under the same energy density.

As for the above problems, no effective solution has been provided yet.

### Summary

A method and apparatus for configuring energy storage, and an electronic device are provided in examples of the present disclosure, so as to solve at least the technical problems that due to unbalanced charge-discharge of energy storage batteries in an energy storage system in the related art, the use efficiency of the energy storage system is low, and the service life of the batteries is short.

According to one aspect of the examples of the present disclosure, a method for configuring energy storage is provided. The method includes: determining a demand power of a target electricity consumption region; determining a rated energy of an energy storage system based on the demand power, wherein the energy storage system includes a plurality of energy storage batteries, the plurality of energy storage batteries are connected to a power grid through a plurality of string inverters, the plurality of energy storage batteries correspond one-to-one to the plurality of string inverters, and each energy storage battery of the plurality of energy storage batteries includes a plurality of cells; determining battery parameters respectively corresponding to the plurality of energy storage batteries according to a rated capacity of the energy storage system, wherein the battery parameters of each of the plurality of energy storage batteries at least include: cell energies respectively corresponding to the plurality of cells, and a rated energy of each of the plurality of the energy storage batteries; and determining parameter configuration results respectively corresponding to the plurality of string inverters based on the battery parameters respectively corresponding to the plurality of energy storage batteries, wherein each of the parameter configuration results includes at least a rated power of the corresponding string inverter.

According to another aspect of the examples of the present disclosure, an apparatus for configuring energy storage is further provided. The apparatus includes: a first determination module, configured to determine a demand power of a target electricity consumption region; a second determination module, configured to determine a rated energy of an energy storage system based on the demand power, wherein the energy storage system includes a plurality of energy storage batteries, the plurality of energy storage batteries are connected to a power grid through a plurality of string inverters, the plurality of energy storage batteries correspond one-to-one to the plurality of string inverters, and each energy storage battery of the plurality of energy storage batteries includes a plurality of cells; a third determination module, configured to determine battery parameters respectively corresponding to the plurality of energy storage batteries according to a rated capacity of the energy storage system, wherein the battery parameters of each of the plurality of energy storage batteries at least include: cell energies respectively corresponding to the plurality of cells, and a rated energy of each of the plurality of the energy storage batteries; and a fourth determination module, configured to determine parameter configuration results respectively corresponding to the plurality of string inverters based on the battery parameters respectively corresponding to the plurality of energy storage batteries, wherein each of the parameter configuration results includes at least a rated power of the corresponding string inverter.

According to yet another aspect of the present disclosure, an electronic device is further provided. The electronic device includes one or more processors and a memory; wherein the memory is configured to store one or more programs, and the one or more programs, when executed by the one or more processors, cause the one or more processors to implement any method for configuring energy storage.

In the examples of the present disclosure, the demand power of the target electricity consumption region is determined; the rated energy of the energy storage system is determined based on the demand power, wherein the energy storage system includes the plurality of energy storage batteries, the plurality of energy storage batteries are connected to the power grid through the plurality of string inverters, the plurality of energy storage batteries correspond one-to-one to the plurality of string inverters, and each energy storage battery of the plurality of energy storage batteries includes the plurality of cells; the battery parameters respectively corresponding to the plurality of energy storage batteries are determined according to the rated capacity of the energy storage system, wherein the battery parameters of each of the plurality of energy storage batteries at least include: the cell energies respectively corresponding to the plurality of cells, and the rated energy of each of the plurality of the energy storage batteries; and the parameter configuration results respectively corresponding to the plurality of string inverters are determined based on the battery parameters respectively corresponding to the plurality of energy storage batteries, wherein each of the parameter configuration results includes at least the rated power of the corresponding string inverter. Thus, parameters of the energy storage batteries and parameters of the string inverters are accurately configured based on the demand power of the target electricity consumption region, the use efficiency of the energy storage system is improved, and the use loss of the energy storage batteries is reduced. Further, the technical problems that due to unbalanced charge-discharge of the energy storage batteries in the energy storage system in the related art, the use efficiency of the energy storage system is low, and the service life of the batteries is short are solved.

### Brief Description of the Drawings

The accompanying drawings described herein are used for providing further understanding of the present disclosure as a constituent part of the present disclosure. Illustrative examples of the present disclosure and their descriptions serve to explain the present disclosure, instead of limiting the present disclosure improperly. In the figures:
Fig. 1 is a flowchart of a method for configuring energy storage according to an example of the present disclosure;
Fig. 2 is a schematic diagram of an architecture of an optional configuration of a station building type energy storage system with string inverters according to an example of the present disclosure;
Fig. 3 is a primary main wiring diagram of an optional configuration of a station building type energy storage system with string inverters according to an example of the present disclosure;
Fig. 4 is a flowchart of an optional method for configuring energy storage according to an example of the present disclosure; and
Fig. 5 is a schematic diagram of an apparatus for configuring energy storage according to an example of the present disclosure.

### Detailed Description of the Embodiments

In order to enable those skilled in the art to better understand solutions of the present disclosure, the technical solutions in examples of the present disclosure will be clearly and comprehensively described below in conjunction with the accompanying drawings in the examples of the present disclosure. Apparently, the examples described are merely some examples rather than all examples of the present disclosure. Based on the examples of the present disclosure, all other examples derived by those of ordinary skill in the art without creative efforts should fall within the scope of protection of the present disclosure.

It should be noted that the terms "first", "second", etc. in the description, the claims, and the above accompanying drawings of the present disclosure are used to distinguish between similar objects, instead of necessarily describing a specific sequence or a successive order. It should be understood that data used in such a way are interchangeable where appropriate, so that the examples of the present disclosure described herein can be implemented in other orders than those illustrated or described herein. In addition, the terms "comprise", "include", "have", and their any variants are intended to cover the non-exclusive inclusion. For example, a process, method, system, product, or device that includes a series of steps or units is not necessarily limited to those steps or units expressly listed, but can include other steps or units not expressly listed or inherent to such a process, method, product, or device.

A method example for configuring energy storage is provided according to the examples of the present disclosure. It should be noted that steps shown in the flowcharts of the accompanying drawings can be executed in a computer system, such as a set of computer-executable instructions. Moreover, although logic sequences are shown in the flowcharts, in some cases, the steps shown or described can be executed in an order different from those herein.

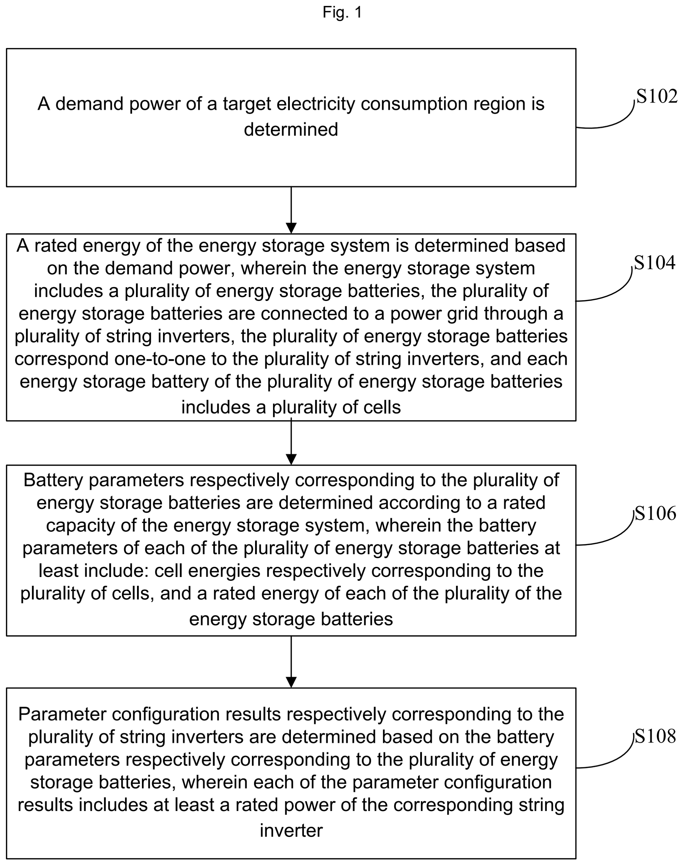

Fig. 1 is a flowchart of a method for configuring energy storage according to an example of the present disclosure. As shown in Fig. 1, the method includes the following steps.

At S102, a demand power of a target electricity consumption region is determined.

In one optional example, the step that a demand power of a target electricity consumption region is determined includes: a line loading demand power and an energy storage load demand power of the target electricity consumption region are determined; and the demand power of the target electricity consumption region is determined based on the line loading demand power and the energy storage load demand power.

Optionally, the target electricity consumption region may be an industrial and commercial park. Calculation and evaluation may be performed according to the line loading power demand and the energy storage load power demand of the industrial and commercial park as follows:
At S1021, line loading calculation: first, it is necessary to acquire a capacity and a load of an electrical line of the industrial and commercial park. An electrical load and a power factor of each time period may be recorded through a monitoring device, and an average load and a peak load are calculated. The line loading power demand may be determined according to a load curve and the capacity of the electrical line.

At S1022, energy storage load power calculation: the energy storage system may be configured to balance load fluctuations and the peak load of the industrial and commercial park. Charge-discharge power of the energy storage system may be recorded through the monitoring device, and the average load and the peak load are calculated. The energy storage load power demand may be determined according to a capacity and efficiency of the energy storage system.

At S1023, comprehensive demand power calculation: comprehensive demand power is obtained by adding the line loading power demand and the energy storage load power demand of the industrial and commercial park. In this way, it can be ensured that the electrical supply of the industrial and commercial park satisfies the load demand, and sufficient energy storage support is offered.

It should be noted that the calculation and evaluation of the demand power of the industrial and commercial park need to take load characteristics of the industrial and commercial park, power demand of electrical devices, load fluctuations, etc. into account. The demand power obtained on this basis is more accurate and reliable, and more in line with the actual electrical demand in the industrial and commercial park. In addition, the demand power may also be adjusted and optimized according to the actual condition to satisfy the electrical demand and the energy storage demand of the industrial and commercial park.

At S104, a rated energy of the energy storage system is determined based on the demand power, wherein the energy storage system includes a plurality of energy storage batteries, the plurality of energy storage batteries are connected to a power grid through a plurality of string inverters, the plurality of energy storage batteries correspond one-to-one to the plurality of string inverters, and each energy storage battery of the plurality of energy storage batteries includes a plurality of cells.

Optionally, the above energy storage system is a station building type energy storage system that is a type of building or building group integrated with energy storage devices to store and release the electrical energy. The station building type energy storage system may be composed of a battery pack, an inverter, an energy management system, etc., and may store the electrical energy for emergency use. The station building type energy storage system may store and release the electrical energy according to the demand of the power grid by being connected to the power grid, so as to balance the difference between supply and demand of an electrical system and improve the stability and reliability of the power grid. Moreover, the station building type energy storage system may also be configured to cope with the peak-valley electricity price difference in the electrical market, so as to reduce the electrical cost by purchasing and storing the electrical energy during the valley time period and releasing the electrical energy during the peak time period. In addition, the station building type energy storage system may also provide backup electricity for the building to ensure normal operation of the building in a case of electrical outage or emergency.

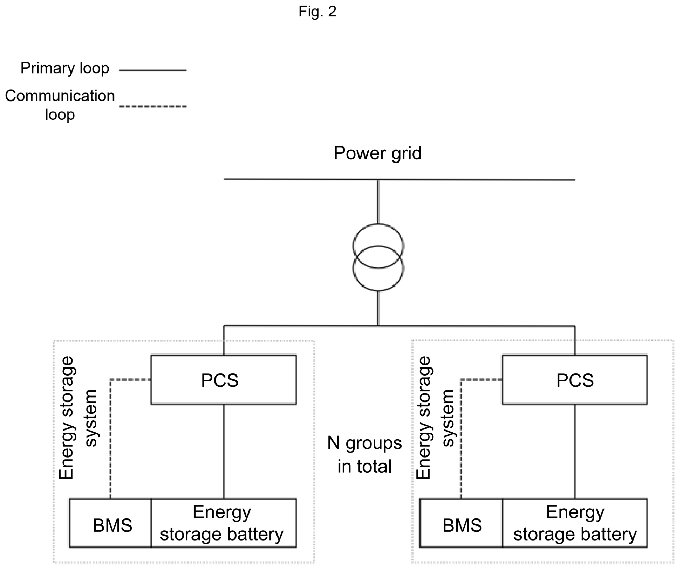

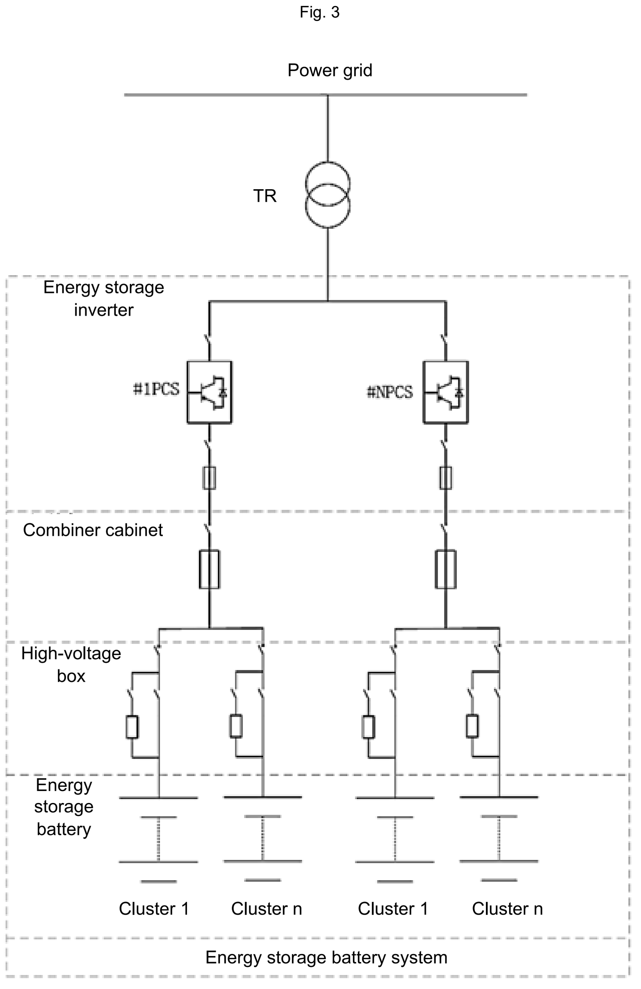

Optionally, the energy storage system according to the examples of the present disclosure is a station building type energy storage system with string inverters. The energy storage system is a type of energy storage system in which a plurality of energy storage batteries are connected through the string inverters. The string inverter is a type of electrical conversion device configured for a solar photovoltaic system. The string inverter converts the direct-current electrical energy of solar panels in string connection into alternating-current electrical energy to be supplied to the power grid or for personal use. Each energy storage battery has its own direct current-direct current converter (DC-DC converter) that is configured to regulate a direct-current output voltage of the energy storage battery to a direct-current voltage demanded by the energy storage system. The energy storage batteries are connected to the alternating-current power grid through the string inverters, so that energy storage and electrical energy output are achieved. The station building type energy storage system with string inverters has the advantages as follows: 1. High flexibility: Each energy storage battery can operate independently, which indicates that the capacity and power of the energy storage system can be flexibly configured as demanded. 2. Fault isolation: If one energy storage battery in the energy storage system malfunctions, the other energy storage batteries can still operate normally, and the entire energy storage system is not affected. 3. High efficiency: The string inverters can achieve maximum power point tracking and power assigning, making the energy conversion efficiency of the energy storage system higher. 4. High reliability: Since each storage battery has its own DC-DC converter, the energy storage system has higher reliability and robustness. Even if one storage battery malfunctions, the other energy storage batteries can still operate normally. In general, the station building type energy storage system with string inverters can improve the flexibility, reliability, and efficiency of the energy storage system. For example, Fig. 2 is a schematic diagram of an architecture of an optional configuration of a station building type energy storage system with string inverters according to an example of the present disclosure. Fig. 3 is a primary main wiring diagram of an optional configuration of a station building type energy storage system with string inverters according to an example of the present disclosure. As shown in Figs. 2 and 3, the configuration process of the energy storage system is based on the energy storage batteries, a three-level Battery Management System (BMS), a battery cluster combiner unit, and energy storage bidirectional inverters. The BMS is configured to collect, monitor, control, and protect a battery system, and can upload battery data to the string inverter (Power Conversion System (PCS)) for the operation and protection of the energy storage system. The PCS is configured to control the charge-discharge power of the battery pack. Rated power P of a single string inverter (PCS) does not exceed 200 kW, and rated energy of a connected single-stack battery (i.e. a single energy storage battery) is denoted by Q2, wherein Q2≤n*P (wherein n=1/C, and C is a charge-discharge rate). A plurality of cells included in the single energy storage battery are connected in parallel or in series.

In one optional example, the step that a rated energy of the energy storage system is determined based on the demand power includes: a peak-valley electricity price duration corresponding to the target electricity consumption region is determined, wherein the peak-valley electricity price duration is a duration during which an electricity price is less than a preset electricity price threshold in a preset time period; and the rated energy of the energy storage system is determined according to the demand power and the peak-valley electricity price duration.

Optionally, the demand power P1 is determined according to the line loading power demand and the energy storage load power demand corresponding to the target electricity consumption region, and the peak-valley electricity price duration t is determined according to electricity price information of each time period in a region where the target electricity consumption region is located, so that the charge-discharge rate C=1/t and the rated energy Q=P1*t of the energy storage system are calculated.

At S106, battery parameters respectively corresponding to the plurality of energy storage batteries are determined according to a rated capacity of the energy storage system, wherein the battery parameters of each of the plurality of energy storage batteries at least include: cell energies respectively corresponding to the plurality of cells, and a rated energy of each of the plurality of the energy storage batteries.

Optionally, after the rated capacity of the energy storage system is determined, the battery parameters which related to each of the plurality of energy storage batteries and each of the plurality of cells can be further acquired, and the battery parameters acquired on this basis can better satisfy the rated capacity requirements of the energy storage system.

Optionally, the cell energy is determined as Q1, the number of series-connected branches of the cells corresponding to the energy storage battery (i.e. the battery pack) in the energy storage system is determined as S, the number of parallel-connected branches of the cells is determined as J, and the direct-current rated voltage of the single energy storage battery is determined as Vn=3.2*S (wherein Vdc denotes the direct-current voltage of the battery system), wherein a range of the direct-current voltage is preferably 1000≤2.65*S<Vdc<3.65*S≤1500 Vdc. The rated energy Q2 of the single energy storage battery is determined, wherein Vdc indicates a voltage range during charge and discharge of the battery system, i.e. a voltage range corresponding to a state of charge (SOC)=0% to SOC=100%, and Vn indicates a voltage in a case of SOC=50%.

At S108, parameter configuration results respectively corresponding to the plurality of string inverters are determined based on the battery parameters respectively corresponding to the plurality of energy storage batteries, wherein each of the parameter configuration results includes at least a rated power of the corresponding string inverter.

Optionally, the plurality of string inverters are crucial components in the energy storage system, and function to connect a plurality of energy storage units (such as the batteries and super capacitors) into a string, so as to achieve reliable operation of the energy storage system. The plurality of string inverters can ensure efficient operation of the energy storage batteries by optimizing the current and the voltage, and control output power of the energy storage system to satisfy different demand. In addition, the plurality of string inverters can also monitor and detect faults of the energy storage system to ensure safe and stable operation of the energy storage system. In conclusion, the plurality of string inverters are crucial to connection, control, and management in the energy storage system. In the above manner, parameters of the plurality of string inverters are further configured based on the battery parameters respectively corresponding to the plurality of energy storage batteries. Thus, the plurality of string inverters can better conform to the operation demand of the energy storage system, and better ensure efficient operation of the energy storage batteries and safe and stable operation of the energy storage system.

In one optional example, the step that parameter configuration results respectively corresponding to the plurality of string inverters are determined based on the battery parameters respectively corresponding to the plurality of energy storage batteries includes: a charge-discharge rate of the energy storage system is determined based on the peak-valley electricity price duration; and target rated powers respectively corresponding to the plurality of string inverters are determined according to the rated energy respectively corresponding to the plurality of energy storage batteries and the charge-discharge rate, wherein each of the target rated powers is greater than or equal to a product of a rated energy of a corresponding energy storage battery and the charge-discharge rate.

Optionally, the peak-valley electricity price duration t is determined according to the electricity price information of each time period in the region where the target electricity consumption region is located, so as to calculate the charge-discharge rate C=1/t. In the above manner, when the target rated power of each of the string inverters is determined, both the rated capacity of each energy storage battery and the charge-discharge rate of the energy storage system are taken into account. The plurality of string inverters obtained on this basis can better satisfy the charge-discharge demand of the energy storage system and enhance the operation stability of the energy storage system.

In one optional example, a minimum in direct-current side voltages respectively corresponding to the plurality of string inverters is less than or equal to a preset first value, a maximum of the direct-current side voltages respectively corresponding to the plurality of string inverters is less than or equal to a preset second value, the preset first value is determined based on the number of series-connected branches of cells in an energy storage battery corresponding to each of the plurality of the string inverters, and the preset first value is less than the preset second value; and the number of the plurality of string inverters is greater than or equal to a quotient between the demand power and a rated capacity of a corresponding energy storage battery. For example, when the plurality of string inverters are configured, the following conditions are to be satisfied: the rated power P of the string inverter (PCS) is greater than or equal to Q2*C, the number N of the string inverter (PCS) is greater than or equal to P1/P, wherein N is rounded; and the range of the direct-current side voltage of the string inverter (PCS) is as follows: the minimum Umin of the direct-current side voltages is less than or equal to 2.7*S, and the maximum Umax of the direct-current side voltages is less than or equal to 1500 Vdc. The plurality of string inverters configured in the above manner can better adapt to the power demand and the energy demand of the target electricity consumption region. The charge-discharge rate demand of the energy storage system can be satisfied, the number of parallel-connected clusters of the energy storage batteries can be reduced, the circulation of the energy storage system can be reduced, and the efficiency of the system can be improved.

In one optional example, the step that target rated powers respectively corresponding to the plurality of string inverters are determined according to the rated energies respectively corresponding to the plurality of energy storage batteries and the charge-discharge rate includes: a target rated power of any one string inverter of the plurality of string inverters is determined according to the rated energies respectively corresponding to the plurality of energy storage batteries and the charge-discharge rate in the following manner: a first rated power of any one string inverter is determined according to the rated energy of any one energy storage battery and the charge-discharge rate; a power utilization rate of any one string inverter is determined based on the rated energy of any one energy storage battery, the charge-discharge rate, and the first rated power of any one string inverter; and the target rated power of any one string inverter is determined based on the first rated power of the any one string inverter when the power utilization rate of the any one string inverter is greater than a preset power utilization rate threshold.

Optionally, the rated power of the any one string inverter is selected according to the corresponding power utilization rate. The first rated power is determined as the target rated power of the any one string inverter when the first power utilization rate of the any one string inverter is large and greater than the preset power utilization rate threshold. To be specific, when the first power utilization rate of the any one string inverter is greater than the preset power utilization rate threshold, the first rated power of the any one string inverter is taken as the target rated power. In the above manner, the charge-discharge rate demand of the energy storage system can be satisfied, the number of the parallel-connected clusters of the energy storage batteries can be reduced, the circulation of the energy storage system can be reduced, and the efficiency of the energy storage system can be improved.

In one optional example, the step that a first rated power of the any one string inverter is determined according to the rated energy of any one energy storage battery and the charge-discharge rate includes: a ratio of the rated energy of the energy storage system to the rated energy of the any energy storage battery is determined; and the first rated power of any one string inverter is determined according to the rated energy of the any one energy storage battery and the charge-discharge rate when the ratio is an integer.

Optionally, the ratio of the rated energy of the energy storage system to the rated energy of the any one energy storage battery may be an integer or not. In order to ensure that the power and energy of the energy storage battery can be fully utilized, when the energy is configured for the energy storage system and the energy storage battery, the energy storage battery whose rated energy to the rated energy of the energy storage system is in integer multiple proportion is selected, and the rated power of a corresponding string inverter is determined based on the rated energy of the selected energy storage battery and the charge-discharge rate. Thus, the power utilization rate and an energy utilization rate of the energy storage battery are increased.

In one optional example the method further includes: when the power utilization rate of the any one string inverter is less than or equal to the preset power utilization rate threshold, the battery parameters of an energy storage battery corresponding to the any one string inverter are updated until a new power utilization rate of the any one string inverter is less than or equal to the preset power utilization rate threshold; or when the ratio is not an integer, the rated energy of the energy storage system and the battery parameters of the energy storage battery corresponding to the any one string inverter are updated until a new power utilization rate of the any one string inverter is less than or equal to the preset power utilization rate threshold.

Optionally, when the power utilization rate of the any one string inverter is too small and less than the preset power utilization rate threshold, or the first rated power of the any one string inverter is greater than the preset power threshold (for example, 200), the battery parameters (i.e. the cell energy Q1 of a single cell and the rated energy Q2 of the single energy storage battery) of the corresponding energy storage battery are updated anew, and the rated power and the power utilization rate of the any one string inverter, and the ratio of the rated energy of the energy storage system to the rated energy of the any one energy storage battery are calculated anew until corresponding power utilization rate requirements and corresponding rated power requirements are satisfied.

Optionally, when the ratio of the rated energy of the energy storage system to the rated energy of the any one energy storage battery is not an integer, it indicates that the power and energy of the any one energy storage battery cannot be fully utilized. In this case, it is necessary to regulate the rated energy Q of the energy storage system, the cell energy Q1 of the single cell, and the rated energy Q2 of the single energy storage battery anew. The rated power and the power utilization rate of a string inverter corresponding to the any one energy storage battery, and the ratio of the rated energy of the energy storage system to the rated energy of the any one energy storage battery are calculated anew on this basis until the corresponding power utilization rate requirements and the corresponding rated power requirements are satisfied.

Through the above S102 to S108, the parameters of the energy storage batteries and the parameters of the string inverters can be accurately configured based on the demand power of the target electricity consumption region. Thus, the use efficiency of the energy storage system is improved, and the use loss of the energy storage batteries is reduced. Further, the technical problems that due to unbalanced charge-discharge of the energy storage batteries in the energy storage system in the related art, the use efficiency of the energy storage system is low, and the service life of the batteries is short are solved.

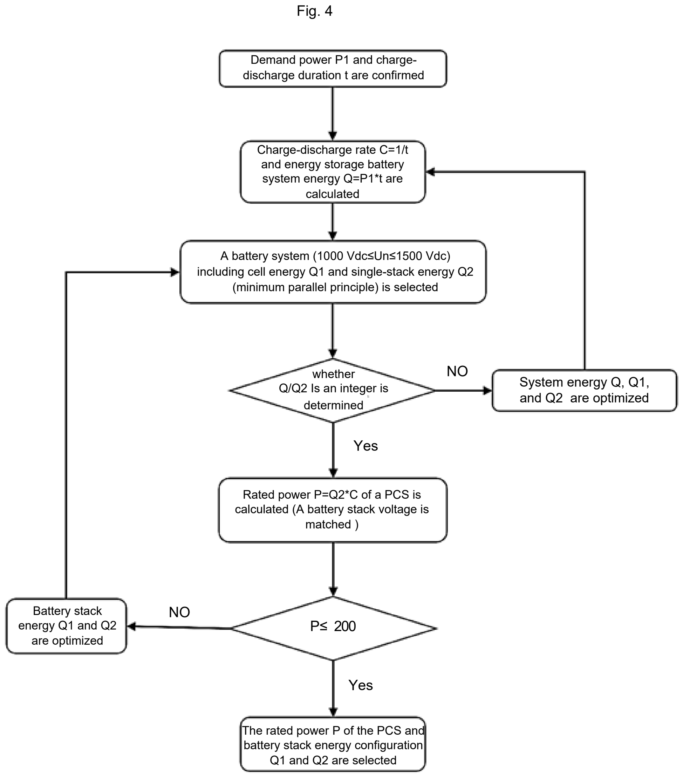

Based on the above examples and the optional examples, the present disclosure provides an optional embodiment. Fig. 4 is a flowchart of an optional method for configuring energy storage according to an example of the present disclosure. As shown in Fig. 4, the method is applied to a framework of the station building type energy storage system with string inverters which including the energy storage batteries, the three-level battery management system (BMS), the battery cluster combiner unit, and the energy storage bidirectional inverters. The BMS is configured to collect, monitor, control, and protect the battery system, and can upload the battery data to the string inverters (PCS) for system operation and protection of the energy storage system. The PCS is configured to control the charge-discharge power of the battery pack. The rated power P of a single string inverter (PCS) does not exceed 200 kW, and the rated energy of the connected single-stack battery (i.e. a single energy storage battery) is denoted by Q2, wherein Q2≤n*P (wherein n=1/C, and C is the charge-discharge rate). The method includes:
At S1: the demand power P1 is determined according to the line loading power demand and the energy storage load power demand of the industrial and commercial park (the target electricity consumption region), and the peak-valley electricity price duration t is determined according to the electricity price information of each time period in the region where the industrial and commercial park is located, so that the charge-discharge rate C=1/t and the rated energy Q=P1*t of the energy storage system are calculated.

At S2: the cell energy is determined as Q1, the number of series-connected energy storage batteries (i.e. the battery packs) in the energy storage system is determined as S, the number of parallel-connected energy storage batteries is determined as J, and the direct-current rated voltage of the single energy storage battery is determined as Vn=3.2*S, wherein the range of the direct-current voltage is preferably 1000≤2.65*S<Vdc<3.65*S≤1500 Vdc; and the rated energy Q2 of the single energy storage battery is determined.

At S3: the rated power P of the string inverter (PCS) is determined to be greater than or equal to Q2*C, the number N of the string inverter (PCS) is determined to be greater than or equal to P1/P, wherein N is rounded; and the range of the direct-current side voltages of the string inverter (PCS) is determined as follows: the minimum Umin of the direct-current side voltage is less than or equal to 2.7*S, and the maximum Umax of the direct-current side voltage is less than or equal to 1500 Vdc. Specifically, if the calculated value of P1/P is an integer, S4 continues to be executed, otherwise the system energy Q, Q1, and Q2 are optimized, and S1 is returned anew.

At S4: the power utilization rate η=(Q2*C)/P of the string inverter is calculated, S1 to S3 are repeated to obtain a maximum of η according to parameters of existing standard string inverters and parameters of a prevailing battery system, and a value of the rated power P of the corresponding single string inverter is selected.

At S5: whether the calculated value of the rated power P of the single string inverter is less than or equal to 200 is determined, if yes, the calculated value of the rated power P of the single string inverter is taken as a final configuration of the single string inverter, otherwise the energy Q1 and Q2 of the battery stack (i.e. the energy storage battery) are optimized anew, and S2 is returned.

At S6: the rated energy Q of the energy storage system, the rated power P of the string inverter (PCS), and the maximum power utilization rate η are obtained through the analysis in the above steps, so that the configuration of the energy storage batteries and the configuration of the string inverter (PCS) of the energy storage system can be optimized to a certain extent.

It should be noted that the rated capacity of the energy storage battery, the rated power of the string inverter, and the charge-discharge hours are optimized to form the optimal configurations by comprehensively considering the electricity consumption load, the system capacity margin, the electricity price, etc. It is appropriate that a small value is taken as the number of the parallel-connected energy storage battery stacks. Thus, the inter-cluster circulation can be reduced, the operation stability of the system can be improved, the system loss can be reduced, and the efficiency can be improved. It is suitable to select the energy storage inverter of 1500 Vdc class, and a large value of the rated power is preferred to improve the power density and reduce the system cost. When the capacity of the energy storage battery and the power of the string inverter (PCS) are configured, it is necessary to confirm that the energy storage battery system can be fully discharged at full power for the entire time period of the peak electricity price, and fully charged at full power during the entire time period of the valley electricity price.

The present disclosure can achieve at least one of the following effects: 1) Single cluster management and parallel connection of few clusters can be achieved through the configuration flexibility of the string inverter (PCS) and the station building type battery stack system. Thus, the inter-cluster circulation generated through parallel connection of the battery clusters is reduced or eliminated, and the operation stability of the energy storage system is improved. Moreover, the system loss is reduced, the system efficiency is improved, and the energy utilization rate and the customer revenue are increased. 2) The present disclosure is suitable for long-term charge-discharge demand of the industry and commerce. The maximum charge-discharge duration is configured according to the local electricity price. The full discharge and full charge can be performed during the entire time period of the peak electricity price and the entire time period of the valley electricity price respectively, so that the peak-valley arbitrage is maximized. 3) The single-battery stack+PCS system operates independently, and the power can be automatically assigned according to the SOC of the battery system, so that the state of each battery stack is consistent. The single-stack fault does not affect the system operation, and the modular management, operation, and maintenance are simple and convenient, so that the fault rate is systematically reduced, the on-line rate of the battery system is increased, and the maintenance cost is reduced.

An apparatus for configuring energy storage is further provided in the example. The apparatus is configured to implement the above examples and the preferred embodiments, the repetitions of which will not be described in detail herein. As used below, the term "module" and "apparatus" can be a combination of software and/or hardware that implements predetermined functions. While the apparatus described in the following example is preferably implemented through software, it is possible to conceive that the apparatus is implemented through hardware or a combination of software and hardware.

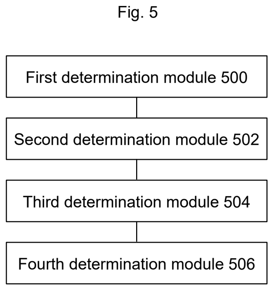

An apparatus example configured to implement the above method for configuring energy storage is further provided according to the examples of the present disclosure. Fig. 5 is a schematic structural diagram of an apparatus for configuring energy storage according to an example of the present disclosure. As shown in Fig. 5, the above apparatus for configuring energy storage includes: a first determination module 500, a second determination module 502, a third determination module 504, and a fourth determination module 506; where
the first determination module 500 is configured to determine a demand power of a target electricity consumption region;
the second determination module 502 is connected to the first determination module 500 and configured to determine a rated energy of an energy storage system based on the demand power, wherein the energy storage system includes a plurality of energy storage batteries, the plurality of energy storage batteries are connected to a power grid through a plurality of string inverters, the plurality of energy storage batteries correspond one-to-one to the plurality of string inverters, and each energy storage battery of the plurality of energy storage batteries includes a plurality of cells;
the third determination module 504 is connected to the second determination module 502 and configured to determine battery parameters respectively corresponding to the plurality of energy storage batteries according to a rated capacity of the energy storage system, wherein the battery parameters of each of the plurality of energy storage batteries at least include: cell energies respectively corresponding to the plurality of cells, and a rated energy of of each of the plurality the energy storage batteries; and
the fourth determination module 506 is connected to the third determination module 504 and configured to determine parameter configuration results respectively corresponding to the plurality of string inverters based on the battery parameters respectively corresponding to the plurality of energy storage batteries, wherein each of the parameter configuration results include at least a rated power of the corresponding string inverter.

In the examples of the present disclosure, the first determination module 500 is configured to determine the demand power of the target electricity consumption region; the second determination module 502 is connected to the first determination module 500 and configured to determine the rated energy of the energy storage system based on the demand power, wherein the energy storage system includes the plurality of energy storage batteries, the plurality of energy storage batteries are connected to the power grid through the plurality of string inverters, the plurality of energy storage batteries correspond one-to-one to the plurality of string inverters, and each energy storage battery of the plurality of energy storage batteries includes the plurality of cells; the third determination module 504 is connected to the second determination module 502 and configured to determine the battery parameters respectively corresponding to the plurality of energy storage batteries according to the rated capacity of the energy storage system, wherein the battery parameters of each of the plurality of energy storage batteries at least include: the cell energies respectively corresponding to the plurality of cells, and the rated energy of each of the plurality of the energy storage batteries; and the fourth determination module 506 is connected to the third determination module 504 and configured to determine the parameter configuration results respectively corresponding to the plurality of string inverters based on the battery parameters respectively corresponding to the plurality of energy storage batteries, wherein each of the parameter configuration results include at least the rated power of the corresponding string inverters. The parameters of the energy storage batteries and the parameters of the string inverters can be accurately configured based on the demand power of the target electricity consumption region. Thus, the use efficiency of the energy storage system is improved, and the use loss of the energy storage batteries is reduced. Further, the technical problems that due to unbalanced charge-discharge of the energy storage batteries in the energy storage system in the related art, the use efficiency of the energy storage system is low, and the service life of the batteries is short are solved.

It should be noted that all the above modules can be implemented through software or hardware. In the latter case, the modules can be implemented in the following manner: the above modules are positioned in the same processor, or the above modules are positioned in different processors in any combination form.

It should also be noted herein that the first determination module 500, the second determination module 502, the third determination module 504, and the fourth determination module 506 correspond to S102 to S108 in the example respectively. The above modules have same instances and application scenarios as those implemented by the corresponding steps, but are not limited to the contents disclosed in the above example. It should be noted that the above modules may be operated in a computer terminal as part of the apparatus.

It should be noted that reference can be made to the relevant description in the example for the optional or preferred embodiments of the example, which will not be repeated herein.

The above apparatus for configuring energy storage may further include a processor and a memory. The first determination module 500, the second determination module 502, the third determination module 504, the fourth determination module 506, etc. are stored in the memory as program modules, and the processor executes the above program modules stored in the memory to implement corresponding functions.

The processor contains a core that retrieves the corresponding program module from the memory. One or more cores may be provided. The memory probably includes a non-permanent memory such as a random access memory (RAM), and/or a non-volatile internal memory such as a read-only memory (ROM) or a flash RAM of computer-readable media. The memory includes at least one storage chip.

A non-volatile storage medium is further provided according to the examples of the present disclosure. Optionally, in the example, the above non-volatile storage medium includes a program stored, wherein the above program, when run, controls a device where the above non-volatile storage medium is located to perform any method for configuring energy storage described above.

Optionally, in the example, the above non-volatile storage medium may be located in any computer terminal in a computer terminal group in a computer network, or located in any mobile terminal in a mobile terminal group. The above non-volatile storage medium includes the program stored.

Optionally, the program, when run, controls the device where the non-volatile storage medium is located to execute the following functions of: the demand power of the target electricity consumption region is determined; the rated energy of the energy storage system is determined based on the demand power, wherein the energy storage system includes the plurality of energy storage batteries, the plurality of energy storage batteries are connected to the power grid through the plurality of string inverters, the plurality of energy storage batteries correspond one-to-one to the plurality of string inverters, and each energy storage battery of the plurality of energy storage batteries includes the plurality of cells; the battery parameters respectively corresponding to the plurality of energy storage batteries are determined according to the rated capacity of the energy storage system, wherein the battery parameters of each of the plurality of energy storage batteries at least include: the cell energies respectively corresponding to the plurality of cells, and the rated energy of each of the plurality of the energy storage batteries; and the parameter configuration results respectively corresponding to the plurality of string inverters are determined based on the battery parameters respectively corresponding to the plurality of energy storage batteries, wherein each of the parameter configuration results includes at least the rated power of the corresponding string inverter.

An example of a processor is further provided according to the examples of the present disclosure. Optionally, in the example, the above processor is configured to run a program, wherein the above program, when run, performs any method for configuring energy storage described above.

An example of a computer program product is further provided according to the examples of the present disclosure. The computer program product, when executed in a data processing device, is suitable for executing a program having steps of any method for configuring energy storage described above at initialization time.

Optionally, the above computer program product, when executed in the data processing device, is suitable for executing the program having the following method steps at the initialization time: the demand power of the target electricity consumption region is determined; the rated energy of the energy storage system is determined based on the demand power, wherein the energy storage system includes the plurality of energy storage batteries, the plurality of energy storage batteries are connected to the power grid through the plurality of string inverters, the plurality of energy storage batteries correspond one-to-one to the plurality of string inverters, and each energy storage battery of the plurality of energy storage batteries includes the plurality of cells; the battery parameters respectively corresponding to the plurality of energy storage batteries are determined according to the rated capacity of the energy storage system, wherein the battery parameters of each of the plurality of energy storage batteries at least include: the cell energies respectively corresponding to the plurality of cells, and the rated energy of each of the plurality of the energy storage batteries; and the parameter configuration results respectively corresponding to the plurality of string inverters are determined based on the battery parameters respectively corresponding to the plurality of energy storage batteries, wherein each of the parameter configuration results includes at least the rated power of the corresponding string inverter.

An electronic device is provided in the examples of the present disclosure. The electronic device includes a processor, a memory, and a program stored in the memory and runnable in the processor; where the processor, when executing the program, implements the following steps of: the demand power of the target electricity consumption region is determined; the rated energy of the energy storage system is determined based on the demand power, wherein the energy storage system includes the plurality of energy storage batteries, the plurality of energy storage batteries are connected to the power grid through the plurality of string inverters, the plurality of energy storage batteries correspond one-to-one to the plurality of string inverters, and each energy storage battery of the plurality of energy storage batteries includes the plurality of cells; the battery parameters respectively corresponding to the plurality of energy storage batteries are determined according to the rated capacity of the energy storage system, wherein the battery parameters of each of the plurality of energy storage batteries at least include: the cell energies respectively corresponding to the plurality of cells, and the rated energy of each of the plurality of the energy storage batteries; and the parameter configuration results respectively corresponding to the plurality of string inverters are determined based on the battery parameters respectively corresponding to the plurality of energy storage batteries, wherein each of the parameter configuration results includes at least the rated power of the corresponding string inverter.

The order of the examples of the present disclosure is merely for description, and does not indicate the superiority and inferiority of the examples.

In the above examples of the present disclosure, the description in each example has its own emphasis. Reference can be made to the relevant descriptions in other examples for the part not described in detail in one example.

In a plurality of examples provided by the present disclosure, it should be understood that the technical contents disclosed can be implemented in other ways. The apparatus example described above is merely illustrative. For example, the above modules can be divided by logical function. Other division methods can be employed during actual implementation. For example, a plurality of modules or components can be combined or integrated into another system. Alternatively, it is possible to omit or not execute some features. Further, mutual coupling, direct coupling, or communication connection shown or discussed can be indirect coupling or communication connection through some interfaces or modules in an electrical manner, etc.

The module illustrated as a separate component can be physically separated or not. The component shown as a module can be a physical module or not. To be specific, they can be located in one place or distributed over a plurality of modules. The solution in the example can be implemented by selecting some or all the modules according to the actual demand.

Also, all function modules in each example of the present disclosure can be integrated into one processing module. Each module can alternatively be physically present individually. Two or more modules can alternatively be integrated into one module. The above integrated module can be implemented in a form of hardware or a software function module.

If implemented in the form of a software function module, and sold or used as an independent product, the above integrated module can be stored in one computer-readable non-volatile storage medium. Based on such understanding, the technical solutions of the present disclosure in essence, the part that contributes to the prior art, or all or some of the technical solutions can be embodied in a form of a software product. The computer software product is stored in one non-volatile storage medium and includes a plurality of instructions configured to cause one computer device (which can be a personal computer, a server, or a network device) to execute all or some of the steps of the method in each example of the present disclosure. The foregoing non-volatile storage medium includes: various media capable of storing program codes, such as a universal serial bus (USB) flash disk, a read-only memory (ROM), a random access memory (RAM), a mobile hard disk, a magnetic disk, and an optical disk.

What are described above are merely the preferred embodiments of the present disclosure. It should be pointed out that those of ordinary skill in the art can also make a plurality of improvements and modifications without departing from the principles of the present disclosure, and these improvements and modifications should also be deemed as falling within the scope of protection of the present disclosure.

Industrial Applicability: The solutions according to the examples of the present disclosure can be applied to the field of the energy storage systems. In the examples of the present disclosure, the demand power of the target electricity consumption region is determined; the rated energy of the energy storage system is determined based on the demand power, wherein the energy storage system includes the plurality of energy storage batteries, the plurality of energy storage batteries are connected to the power grid through the plurality of string inverters, the plurality of energy storage batteries correspond one-to-one to the plurality of string inverters, and each energy storage battery of the plurality of energy storage batteries includes the plurality of cells; the battery parameters respectively corresponding to the plurality of energy storage batteries are determined according to the rated capacity of the energy storage system, wherein the battery parameters of each of the plurality of energy storage batteries at least include: the cell energies respectively corresponding to the plurality of cells, and the rated energy of each of the plurality of the energy storage batteries; and the parameter configuration results respectively corresponding to the plurality of string inverters are determined based on the battery parameters respectively corresponding to the plurality of energy storage batteries, wherein each of the parameter configuration results includes at least the rated power of the corresponding string inverter. Thus, the use efficiency of the energy storage system is improved, and the use loss of the energy storage batteries is reduced.

## Claims

1. A method for configuring energy storage, comprising:
determining a demand power of a target electricity consumption region;
determining a rated energy of an energy storage system based on the demand power, wherein the energy storage system comprises a plurality of energy storage batteries, the plurality of energy storage batteries are connected to a power grid through a plurality of string inverters, the plurality of energy storage batteries correspond one-to-one to the plurality of string inverters, and each energy storage battery of the plurality of energy storage batteries comprises a plurality of cells;
determining battery parameters respectively corresponding to the plurality of energy storage batteries according to a rated capacity of the energy storage system, wherein the battery parameters of each of the plurality of energy storage batteries at least comprise: cell energies respectively corresponding to the plurality of cells, and a rated energy of each of the plurality of the energy storage batteries; and
determining parameter configuration results respectively corresponding to the plurality of string inverters based on the battery parameters respectively corresponding to the plurality of energy storage batteries, wherein each of the parameter configuration results comprises at least rated a power of the corresponding string inverter.

2. The method as claimed in claim 1, wherein the determining a demand power of a target electricity consumption region comprises:
determining a line loading demand power and an energy storage load demand power of the target electricity consumption region; and
determining the demand power of the target electricity consumption region based on the line loading demand power and the energy storage load demand power.

3. The method as claimed in claim 1, wherein the determining a rated energy of an energy storage system based on the demand power comprises:
determining a peak-valley electricity price duration corresponding to the target electricity consumption region, wherein the peak-valley electricity price duration is a duration during which an electricity price is less than a preset electricity price threshold in a preset time period; and
determining the rated energy of the energy storage system according to the demand power and the peak-valley electricity price duration.

4. The method as claimed in claim 3, wherein the determining parameter configuration results respectively corresponding to the plurality of string inverters based on the battery parameters respectively corresponding to the plurality of energy storage batteries comprises:
determining a charge-discharge rate of the energy storage system based on the peak-valley electricity price duration; and
determining target rated powers respectively corresponding to the plurality of string inverters according to the rated energies respectively corresponding to the plurality of energy storage batteries and the charge-discharge rate, wherein each of the target rated powers is greater than or equal to a product of a rated energy of a corresponding energy storage battery and the charge-discharge rate.

5. The method as claimed in claim 4, wherein the determining target rated powers respectively corresponding to the plurality of string inverters according to the rated energies respectively corresponding to the plurality of energy storage batteries and the charge-discharge rate comprises:
determining a target rated power of any one string inverter of the plurality of string inverters according to the rated energies respectively corresponding to the plurality of energy storage batteries and the charge-discharge rate in the following manner:
determining a first rated power of the any one string inverter according to the rated energy of any one energy storage battery and the charge-discharge rate;
determining a power utilization rate of the any one string inverter based on the rated energy of the any one energy storage battery, the charge-discharge rate, and the first rated power of the any one string inverter; and
determining the target rated power of the any one string inverter based on the first rated power of the any one string inverter when the power utilization rate of the any one string inverter is greater than a preset power utilization rate threshold.

6. The method as claimed in claim 5, wherein the determining a first rated power of the any one string inverter according to the rated energy of any one energy storage battery and the charge-discharge rate comprises:
determining a ratio of the rated energy of the energy storage system to the rated energy of the any one energy storage battery; and
determining the first rated power of the any one string inverter according to the rated energy of the any one energy storage battery and the charge-discharge rate when the ratio is an integer.

7. The method as claimed in claim 6, further comprising:
updating, when the power utilization rate of the any one string inverter is less than or equal to the preset power utilization rate threshold, the battery parameters of an energy storage battery corresponding to the any one string inverter until a new power utilization rate of the any one string inverter is less than or equal to the preset power utilization rate threshold; or
updating, when the ratio is not an integer, the rated energy of the energy storage system and the battery parameters of the energy storage battery corresponding to the any one string inverter until a new power utilization rate of the any one string inverter is less than or equal to the preset power utilization rate threshold.

8. The method as claimed in any one of claims 4 to 7, wherein
a minimum in direct-current side voltages respectively corresponding to the plurality of string inverters is less than or equal to a preset first value, a maximum of the direct-current side voltages respectively corresponding to the plurality of string inverters is less than or equal to a preset second value, the preset first value is determined based on the number of series-connected branches of cells in an energy storage battery corresponding to each of the plurality of the string inverters, and the preset first value is less than the preset second value; and
the number of the plurality of string inverters is greater than or equal to a quotient between the demand power and a rated capacity of a corresponding energy storage battery.

9. An apparatus for configuring energy storage, comprising:
a first determination module, configured to determine a demand power of a target electricity consumption region;
a second determination module, configured to determine a rated energy of an energy storage system based on the demand power, wherein the energy storage system comprises a plurality of energy storage batteries, the plurality of energy storage batteries are connected to a power grid through a plurality of string inverters, the plurality of energy storage batteries correspond one-to-one to the plurality of string inverters, and each energy storage battery of the plurality of energy storage batteries comprises a plurality of cells;
a third determination module, configured to determine battery parameters respectively corresponding to the plurality of energy storage batteries according to a rated capacity of the energy storage system, wherein the battery parameters of each of the plurality of energy storage batteries at least comprise: cell energies respectively corresponding to the plurality of cells, and a rated energy of each of the plurality of the energy storage batteries; and
a fourth determination module, configured to determine parameter configuration results respectively corresponding to the plurality of string inverters based on the battery parameters respectively corresponding to the plurality of energy storage batteries, wherein each of the parameter configuration results comprise at a least rated power of the corresponding string inverter.

10. An electronic device, comprising one or more processors and a memory; wherein the memory is configured to store one or more programs, and the one or more programs, when executed by the one or more processors, cause the one or more processors to implement the method for configuring energy storage as claimed in any one of claims 1 to 8.
